(19) **Europäisches Patentamt**

**European Patent Office**

**Office européen des brevets**

(11) **EP 0 629 533 B2**

(12) **NEUE EUROPÄISCHE PATENTSCHRIFT**

(45) Veröffentlichungstag und Bekanntmachung des Hinweises auf die Entscheidung über den Einspruch:
**23.08.2000 Patentblatt 2000/34**

(51) Int. Cl.$^7$: **B60T 8/26**

(45) Hinweis auf die Patenterteilung:
**27.08.1997 Patentblatt 1997/35**

(21) Anmeldenummer: **94107084.9**

(22) Anmeldetag: **06.05.1994**

(54) **Verfahren zum Betrieb einer Bremsanlage für ein Kraftfahrzeug**

Method of operating a brake system for a vehicle

Procédé d'operation d'un système de freinage pour véhicule

(84) Benannte Vertragsstaaten:
**DE FR GB IE**

(30) Priorität: **12.06.1993 DE 4319509**

(43) Veröffentlichungstag der Anmeldung:
**21.12.1994 Patentblatt 1994/51**

(73) Patentinhaber: **ROBERT BOSCH GMBH**
**70442 Stuttgart (DE)**

(72) Erfinder:
**Stumpe, Werner, Dipl.-Ing.**
**D-70374 Stuttgart (DE)**

(56) Entgegenhaltungen:
| | |
|---|---|
| **EP-A- 0 173 954** | **EP-A- 0 368 359** |
| **EP-A- 0 561 049** | **EP-A- 0 569 599** |
| **WO-A-90/08682** | **WO-A-93/11008** |
| **DE-A- 3 742 435** | |

EP 0 629 533 B2

**Beschreibung**

Stand der Technik

Eine Bremsanlage für Kraftfahrzeuge insbesondere Nutzfahrzeuge mit den Merkmalen des Oberbegriffs des Anspruchs 1 ist aus der DE 34 16 979 A1 bekannt.

Aus der idealen Bremskraftverteilung läßt sich mit zusätzlichen Bremsendaten die erforderliche Bremsruckverteilung für die die Spannkraft erzeugenden Bremszylinder bestimmen. Statt der gewichtsbezogenen Bremskraft ist also die direkte Zuordnung $p_h = f(p_v)$ für die Bremsanlage des Fahrzeuges möglich. Außerdem ist bekannt und ausführbar die Zuordnung $p_h = f(p_v)$ für beliebige Beladungszustände zu bestimmen. Dies kann durch eine Elektronik erfolgen, die die Bremsdruckregelung im Fahrzeug vornimmt, wenn die für die Berechnung erforderlichen Fahrzeug- und Bremsenparameter in der Elektronik abgespeichert sind und wenn mit zusätzlichen Sensoren statische und dynamische Änderungen der Fahrzeug- und Bremsenparameter erfaßt und in der Berechnung berücksichtigt werden.

Bei derartigen Bremsanlagen erreicht der Bremsdruck an der Hinterachse bei weniger beladenem Fahrzeug seinen Soll- und Istwert früher als der Bremsdruck an der Vorderachse. Dies kann zur Instabilität des Fahrzeugs in dieser Einsteuerphase führen.

Aus der nicht vorveröffentlichten EP 561 049 A1 ist eine Bremsdruckregeleinrichtung zur Verschleißoptimierung zwischen den Bremsen von Nutzfahrzeugen bekannt. Dabei wird an den Bremsen mit höherem Verschleiß eine Druckrückhaltung durchgeführt, welche der beladungsabhängigen Steuerung des Bremsdrucks überlagert ist. Eine Beeinflussung des zeitlichen Gradienten des Druckanstiegs wird nicht beschrieben.

Aus der EP 0 173 954 A2 ist ein Verfahren zum Betrieb einer Bremsanlage für ein Kraftfahrzeug, bei der ein vom Fahrer erzeugtes Bremssignal in für die Räder der Radachsen unterschiedliche Sollbremsdrucksteuersignale umgewandelt wird, wobei diese Sollbremsdrucksteuersignale lastabhängig sind und bei der mit diesen Sollbremsdrucksteuersignalen die entsprechenden Bremsdrücke an den Bremsen eingesteuert werden, bekannt.

Eine zusätzliche Beeinflussung des zeitlichen Gradienten des Druckanstiegs wird nicht beschrieben.

Vorteile der Erfindung

Diese mögliche Instabilität in der Einsteuerphase zu vermeiden ist Ziel der Erfindung. Es wird durch die Anpassung des zeitlichen Druckgradienten der Hinterachse an die Beladung gemäß Anspruch 1 erreicht.

Figurenbeschreibung

Anhand der Zeichnung wird ein Ausführungsbeispiel der Erfindung erläutert.

Es zeigen Figur 1 ein Blockschaltbild einer erfindungsgemäßen Bremsanlage, Figur 2 ein Blockschaltbild eines Regelmodells, Figur 3 Diagramme zur Erläuterung der Erfindung.

Erläuterung des Erfindungsgedanken:

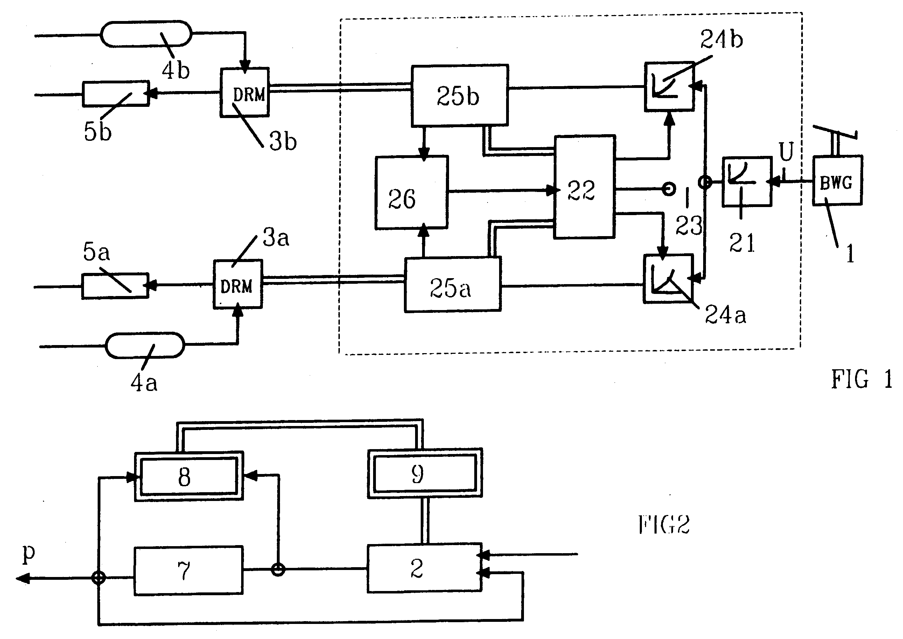

Bei der beispielhaften Bremsanlage der Figur 1 ist vorwiegend nur der elektrisch/ elektronische Teil wiedergegeben. Insgesamt kann es sich um eine Bremsanlage handeln, die rein elektrisch oder gemischt mit anderen Energien (Druckluft, Vakuum, Hydraulik) gesteuert und/oder betätigt wird. Vom Bremswertgeber 1 wird eine Führungsgröße an die Zentral-Elektronik 2 gegeben. Daraus wird in einem Block 21 ein Sollwert bestimmt. Mit den in einem Speicher 22 abgelegten Fahrzeug-und Bremsdaten (fahrzeugspezifischen Daten zur Bestimmung der Bremsdruckverteilung, Eckdaten für Schwerpunktlagen und Bremsenübersetzungen), einem über eine Klemme 23 von einem nicht gezeigten Sensor (z.B. Druck im Luftfederbalg) zugeführten, den Beladungszustand angebenden Signal, das aber auch, wie anschließend noch beschrieben, über einen Datenbus eingegeben werden kann und dem Sollwert aus dem Block 21 werden in Blöcken 24a und 24b Drucksteuersignale für die Bremsen der Vorder- und Hinterachse ermittelt.

Diese Signale beinhalten sowohl die Höhe des an den einzelnen Achsen einzusteuernden Druck als auch eine Information mit welchem Gradienten der Solldruck eingesteuert werden soll. Diese Signale gehen zu Ansteuerblöcken 25a und 25b, die Druckregelmodule 3a und 3b ansteuern, die ihrerseits Druck von Vorratsbehältern 4a und 4b an den Bremszylindern 5a und 5b einsteuern. Über einen Block 26 erfolgt eine Zeitabstimmung.

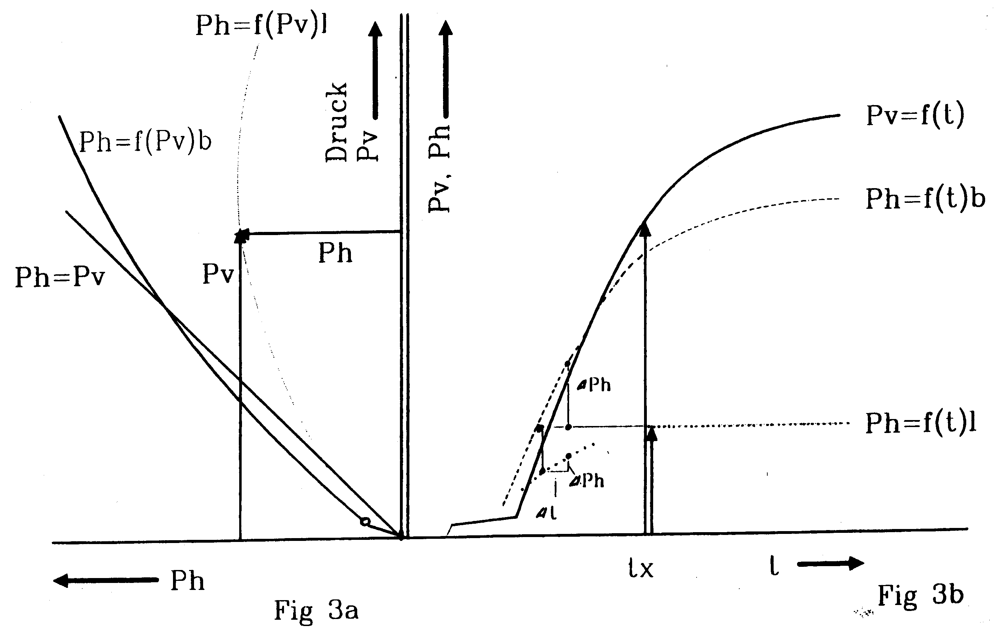

Dem Ausführungsbeispiel der Figur 1 kann z.B. das Reglermodell der Figur 2 zugrundeliegen. Dort ist das Druckregelmodul, die Leitung und der Bremszylinder in einem Block 7 zusammengefaßt. Ein Identifizierungsblock 8 meldet Identifizierungsdaten an einen Block 9, der bei sich ändernden Identifizierungsdaten den Regler 2 anpaßt (modifiziert).

Mit diesem aus der Literatur bekannten Regelmodell soll verdeutlicht werden, daß eine Adaptierung und Zeitabstimmung der Druckregelung darstellbar ist. Stell- und Rückmeldesignale führen zu einer "Strecken"-Identifizierung, die das Verhalten des Druckregelmoduls, der Bremsleitung und des Bremszylinders beschreibt und zu Modifizierungs-Parametern des "Reglers" führt.

An die Druckregelmodule 3a und 3b können außerdem verschiedene Sensoren (Bremsdrucksensoren, Drehzahlfühler der Räder, Achslastgeber und Bremssensoren für Anlegen, Verschleiß, Temperatur) angeschlossen sein, deren Daten zur weiteren Verarbeitung über den Datenbus zum zentralen Steuergerät gegeben werden. Es ist nicht erforderlich, daß alle Sensoren angeschlossen sind. Teilweise sind Daten indirekt durch Vergleich oder Zwischenrechnungen in etwa bestimmbar.

Die Wirkungsweise der erfindungsgemäßen Ausbildung wird nun anhand der Figur 3 erläutert. In Figur 3a ist die Bremsdruckverteilungskurve $p_h = f(p_v)_b$ für das beladene Fahrzeug durchgezogen und die Kurve $p_h = f(p_v)_l$ für das leere Fahrzeug gestrichelt gezeigt. $p_h$ bedeutet den Hinterachsbremsdruck, $p_v$ den Vorderachsbremsdruck. Außerdem ist noch die Kurve $p_h = p_v$ eingezeichnet. Bei beladenem bzw. leerem Fahrzeug soll die entsprechende Druckverteilungskurve für die Druckverteilung wirksam sein. Sie sind im Block 22 abgelegt. Weitere dazwischenliegende Verteilungskurven für das teilbeladene Fahrzeug können ebenfalls im Block 22 abgelegt sein oder berechnet werden. Die zu benutzende Kurve wird aufgrund des Lastsignals an der Klemme 23 ausgewählt.

Anhand der Figur 3b soll die Wirkung durch die Anpassung des Gradienten $\Delta p/\Delta t$ erläutert werden. Hier sind beispielhafte zeitliche Druckverläufe wiedergegeben. Das Anlegen der Radbremsen kann bei unterschiedlichen Drücken erfolgen. Nach dem Anlegen entsteht eine Bremskraft, für die dann die entsprechende Druckverteilung durchgeführt wird.

In Figur 3b sind die Druckverläufe $p_v = f(t)$ und $p_h = f(t)b$ und $p_h = f(t)l$ für das beladene und leere Fahrzeug dargestellt. Im Beispiel wird der Druckaufbau an der Vorderachse $p_v = f(t)$ für das beladene und leere Fahrzeug gleichschnell vorgenommen (durchgezogene Linie). Der Druckverlauf $p_h = f(t)b$ für das beladene Fahrzeug ist als gestrichelte Linie dargestellt. Der erfindungsgemäße Verlauf für das leere Fahrzeug ist punktiert wiedergegeben.

Ziel der elektrischen Bremse ist eigentlich die schnelle Druckanpasssung, damit die vom Fahrer gewünschte Führungsgröße mit geringer Zeitverzögerung erreicht wird. Bei dieser Forderung wird im zeitlichen Ablauf bei leerem Fahrzeug die Hinterachse zuerst ihren Solldruck $p_h$ erreichen, wenn z.B. der Druck genau so schnell aufgebaut wird wie beim beladenen Fahrzeug (dünn ausgezogene Linie). Nachdem auch dem vorderen Bremszylinder ausreichend Energie zugeflossen ist, wird dieser zeitversetzt den Solldruck $p_v$ aufweisen. Das frühzeitige Erreichen von $p_h$ ist aber gleichbedeutend damit, daß die Hinterachse über kurze Zeit einen höheren Kraftschluß in Anspruch nimmt als die Vorderachse. Dies kann leicht zu Instabilität des Fahrzeuges führen. Mit der Erfindung (Druckgradientenanpassung) wird sichergestellt, daß beide Druckregelkreise etwa zeitgleich bei $t_x$ die optimale Druckverteilung erreichen. Daß die Zeitgleichheit nur in etwa erreichbar ist liegt u.a. auch an der diskreten und seriellen Datenverarbeitung moderner elektronischer Steuergeräte. Im Diagramm ist aber deutlich sichtbar, daß die Veränderung der Druckgradienten $(\Delta p/\Delta t)_b$ in $(\Delta p/\Delta t)_l$ die gewisse Zeitangleichung bringt. Dabei wird die Sicherheit eines stabilen Fahrzeuges der Schnelligkeit vorgezogen.

Die Erfindung kann in Bremsanlagen (Druckluft, Vakuum, Hydraulik, Elektrik) mit elektronischer Datenverarbeitung eingesetzt werden. Es wird die Bremsdruckverteilung optimiert, in dem zu der bekannten Druckverteilung $p_h = f(p_v)$ zusätzlich eine Anpassung der Druckgradienten $\Delta p/\Delta t$ vorgenommen wird. Die Anpassung der Druckgradienten kann in Abhängigkeit von der Fahrzeugmasse oder einer oder mehreren Rad- bzw. Achslasten erfolgen. Eine Voreinstellung kann nach statischen Fahrzeug- und Bremsendaten vorgenommen werden. Mit dynamischen Fahrzeug- und Bremsendaten kann der Druckgradient optimiert werden. Dabei kann die Anpassung der Druckgradienten auch durch eine indirekte Ermittlung der Beladung über Verzögerung und Radgeschwindigkeitsdifferenzen erfolgen. Die Dosierung der Durchflußmenge am Druckregelmodul erfolgt nach den vorgenannten Kriterien durch pulsbreitenmodulierte Ansteuerung von Ventilen, oder Steuerung eines Durchflußquerschnittes, oder kraftgesteuerter Dosiereinrichtungen.

**Patentansprüche**

1. Verfahren zum Betrieb einer Bremsanlage für ein Kraftfahrzeug, bei der ein vom Fahrer erzeugtes Bremssignal in für die Räder der Radachsen unterschiedliche Sollbremsdrucksteuersignale umgewandelt wird, wobei diese Sollbremsdrucksteuersignale lastabhängig sind und bei der mit diesen Sollbremsdrucksteuersignalen die entsprechenden Bremsdrücke an den Bremsen eingesteuert werden, dadurch gekennzeichnet, daß zusätzlich der zeitliche Gradient des Druckanstiegs $(\Delta p/\Delta t)$ für die Hinterachse beeinflußbar ist und in Abhängigkeit von der Beladung geändert wird, wobei der Hinterachsbremsdruck bei einer geringeren Beladung langsamer ansteigt als bei einer größeren Beladung.

2. Verfahren nach Anspruch 1, dadurch gekennzeichnet, daß die Gradientenänderung durch Änderung der Impulsbreite und/oder Frequenz einer Ansteuerimpulsfolge für ein Speiseventil erfolgt.

3. Verfahren nach Anspruch 1, dadurch gekennzeichnet, daß die Gradientenänderung durch Änderung des Durchflußquerschnitts erfolgt.

4. Verfahren nach Anspruch 1, dadurch gekennzeichnet, daß die Gradientenänderung mittels einer kraftgesteuerten Dosiereinrichtung erfolgt.

5. Verfahren nach einem der Ansprüche 1 bis 4, dadurch gekennzeichnet, daß die Änderung der Gradienten in Abhängigkeit von einer oder mehreren Rad- oder Achslasten erfolgt.

6. Verfahren nach einem der Ansprüche 1 bis 4, dadurch gekennzeichnet, daß die Änderung des Gradienten in Abhängigkeit von dynamischen Fahrzeug- und/oder Bremsendaten erfolgt.

**Claims**

1. Method of operating a brake system for a motor vehicle, in which a brake signal generated by the driver is converted into different required brake pressure control signals for the wheels of the wheel axles, these required brake pressure control signals being load-dependent, and in which the corresponding brake pressures at the brakes are fed in by means of these required brake pressure control signals, characterized in that additionally the time gradient of the rise in pressure ($\Delta p/\Delta t$) can be influenced for the rear axle and is altered as a function of the load, the rear axle brake pressure rising more slowly in the case of a smaller load than in the case of a larger load.

2. Method according to Claim 1, characterized in that the change in gradient takes place by changing the pulse width and/or frequency of an activation pulse sequence for a feed valve.

3. Method according to Claim 1, characterized in that the change in gradient takes place by changing the flow cross-section.

4. Method according to Claim 1, characterized in that the change in gradient takes place by means of a force-controlled metering device.

5. Method according to one of Claims 1 to 4, characterized in that the change in the gradients takes place as a function of one or more wheel or axle loads.

6. Method according to one of Claims 1 to 4, characterized in that the change in gradient takes place as a function of dynamic vehicle and/or brake data.

**Revendications**

1. Procédé pour faire fonctionner une installation de freinage, dans laquelle on convertit un signal de freinage produit par le conducteur en signaux de commande d'une pression de freinage de consigne différente pour les roues des essieux, ces signaux de commande de la pression de freinage de consigne étant fonction de la charge et dans le cas de laquelle on applique avec ces signaux de commande de pression de freinage de consigne les pressions correspondantes de freinage sur les freins, caractérisé en ce qu' en outre, le gradient dans le temps de l'augmentation de la pression ($\Delta p / \Delta t$) peut être influencé pour l'essieu arrière et être modifié en fonction du chargement, la pression de freinage sur l'essieu arrière croissant plus lentement dans le cas d'un chargement plus faible que dans le cas d'un chargement plus grand.

2. Procédé selon la revendication 1, caractérisé en ce que la variation du gradient a lieu en faisant varier la largeur d'impulsion et/ou la fréquence d'une suite d'impulsions de commande pour une vanne d'alimentation.

3. Procédé selon la revendication 1, caractérisé en ce que la variation du gradient a lieu en faisant varier la section transversale d'écoulement.

4. Procédé selon la revendication 1, caractérisé en ce que la variation du gradient a lieu au moyen d'un dispositif de dosage commandé par une force.

5. Procédé selon l'une des revendications 1 à 4, caractérisé en ce que la variation des gradients a lieu en fonction d'une ou plusieurs charges de roue ou d'essieu.

6. Procédé selon l'une des revendications 1 à 4, caractérisé en ce que la variation du gradient a lieu en fonction de données dynamiques du véhicule et/ou des freins.

EP 0 629 533 B2

FIG 1

4b

5b

DRM

3b

24b

25b

26

22

23

21

U

BWG

1

5a

3a

DRM

25a

24a

4a

FIG2

8

9

7

2

p

Fig 3a

Fig 3b

EP 0 629 533 B2